# EUROPÄISCHE PATENTSCHRIFT

(11) **EP 3 357 616 B1**
(45) Veröffentlichungstag und Bekanntmachung des Hinweises auf die Patenterteilung: **16.09.2020**
(21) Anmeldenummer: 18151896.0
(22) Anmeldetag: 16.01.2018
(51) Int. Cl.: B23B 29/04

(54) **SCHNEIDVORRICHTUNG ZUR SPANABHEBENDEN BEARBEITUNG VON WERKSTÜCKEN**
CUTTING DEVICE FOR MACHINING WORKPIECES
DISPOSITIF DE COUPE DESTINÉ À L'USINAGE DE PIÈCES PAR ENLEVEMENT DE COPEAUX

(30) Priorität: 06.02.2017 DE 202017000616 U
(43) Veröffentlichungstag der Anmeldung: 08.08.2018
(73) Patentinhaber: KARL-HEINZ ARNOLD GmbH, 73760 Ostfildern (DE)
(72) Erfinder: Braun, Harald, 73061 Ebersbach (DE); Meditz, Werner, 72574 Bad Urach (DE)
(74) Vertreter: Patentanwälte Magenbauer & Kollegen Partnerschaft mbB

(56) Entgegenhaltungen:
- US-A- 4 964 764
- US-A1- 2004 136 793
- US-A1- 2015 298 216

## Beschreibung

Die Erfindung betrifft eine Schneidvorrichtung zur spanabhebenden Bearbeitung von Werkstücken, mit wenigstens einem Schneidewerkzeug, das einen Klemmschaft und in Kontakt mit dem zu bearbeitenden Werkstück zu bringende oder stehende Schneidmittel aufweist, wobei der Klemmschaft mehrere Komponenten aufweist, von denen eine ein die Schneidmittel aufweisendes Tragteil und eine andere ein Positionsvorgabeteil ist, die voneinander unabhängig in einer zugeordneten Werkzeugaufnahme eines Werkzeughalters festklemmbar sind, wobei am Positionsvorgabeteil eine Abstützfläche und am Tragteil eine der Abstützfläche zugewandte Gegenstützfläche ausgebildet sind, die in einer Gebrauchsstellung, in der das Tragteil und das Positionsvorgabeteil in der Aufnahme des Werkzeughalters aufgenommen sind, aneinander anliegen, und wobei der Klemmschaft von wenigstens einem Kühlschmierstoffkanal durchsetzt ist, der teilweise an einem an einer der Komponenten angeordneten Rohrstutzen ausgebildet ist und in die andere Komponente eintaucht, wobei der Rohrstutzen unter Ermöglichung allseitiger Radial- und Kippbewegungen gegenüber der Komponente, an dem er angeordnet ist, schwimmend gelagert ist, wobei zur schwimmenden Lagerung des Rohrstutzens Lagermittel vorgesehen sind, die eine Lageraufnahme an der zugeordneten Komponente und wenigstens ein zwischen einer Innenwandung der Lageraufnahme und einer Mantelfläche des Rohrstutzens angeordnetes ringförmiges Lagerelement aus elastisch nachgiebigen Material aufweist.

Es ist bekannt, Schneidvorrichtungen in Langdrehautomaten einzusetzen. Das zu bearbeitende Werkstück, bei dem es sich beispielsweise um eine Metallstange handeln kann, ist in diesem Fall an einer Spindel gelagert und wird durch diese in Rotation versetzt, wobei ein zuvor an das Werkstück herangefahrenes Schneidwerkzeug für die spanabhebende Bearbeitung sorgt. Beispielsweise ist es möglich, mittels des Schneidwerkzeugs eine Ringnut über den Umfang des Werkstücks einzuschneiden.

Schneidwerkzeuge zur spanabhebenden Bearbeitung befinden sich in der Regel in Werkzeughaltern, von denen einer oberhalb des zu bearbeitenden Werkstücks angeordnet ist, der seinerseits in der Regel um eine Achse linear beweglich gelagert ist, um eine Zustellbewegung und somit das Zustellen des betreffenden Schneidwerkzeugs an das Werkstück zu ermöglichen. Die Schneidwerkzeuge sind im Werkzeughalter mittels Klemmmitteln festgeklemmt. Insbesondere bei Verschleiß der Schneidmittel, bei denen es sich insbesondere um Wendeschneidplatten handelt, besteht der Bedarf, das Schneidwerkzeug auszuwechseln. Dabei ist die Klemmung zu lösen, um das Schneidwerkzeug aus der Aufnahme herzunehmen. Nach Austausch der Schneidmittel ist das neue Werkzeug wieder in die Aufnahme einzusetzen und festzuklemmen. Dabei ist auch das neue Werkzeug wieder exakt auszurichten, insbesondere hinsichtlich dessen Lage bezüglich des zu bearbeitenden Werkstücks oder bezüglich der anderen im Werkzeughalter befindlichen Schneidwerkzeuge. Dies ist aufwendig und kostet viel Zeit. Die Wechselgenauigkeit lässt zu wünschen übrig.

Um diesem Problem abzuhelfen ist es bereits aus einem druckschriftlich nicht nachweisbaren Stand der Technik bekannt, den Klemmschaft des Schneidwerkzeugs zweiteilig auszugestalten und zwar ein Positionsvorgabeteil vorzusehen, das beim Werkzeugwechsel im Werkzeughalter festgeklemmt bleibt, und ein zugeordnetes Tragteil vorzusehen, das zum Werkzeugwechsel aus der Aufnahme herausgenommen wird. Am Positionsvorgabeteil befindet sich ein Anschlag, sodass beim Einführen des Tragteils des Klemmschafts eine exakte Positionierung des Tragteils bezüglich des Positionsvorgabeteils erfolgt und daher die Schneidmittel in der benötigten exakten Position sind.

Eine Schneidvorrichtung der eingangs erwähnten Art und in Einklang mit dem Oberbegriff des Anspruchs 1 ist aus der US 4,964,764 bekannt. Die US 4,964,764 offenbart eine Schneidvorrichtung, wie sie beispielsweise in Drehmaschinen eingesetzt wird. Es ist ein Kühlschmierstoffkanal in Form eines Rohrstutzens vorgesehen, der einerseits mit einem im Halter ausgebildeten Kanal und andererseits mit einem in einer Werkzeugaufnahmehülse ausgebildeten Kanal in Verbindung steht. Der Rohrstutzen ist schwimmend gelagert.

Zur Kühlung der Schneidkante und zur Spanabfuhr wird Kühlschmierstoff in den Bereich der Schneidkante gebracht. Die Zuführung des Kühlschmierstoffs erfolgt über wenigstens einen Kühlschmierstoffkanal, der im Schneidwerkzeug ausgebildet ist. Bei zweiteiligen Klemmschäften besteht nunmehr der Bedarf, den Teil des Kühlschmierstoffkanals im Positionsvorgabeteil und den Teil des Kühlschmierstoffkanals im Tragteil zur Umgebung dichtend miteinander zu verbinden, damit kein Kühlschmierstoff aus dem Klemmschaft gelangt. Hierzu ist es bereits bekannt, an der Stirnseite des Tragteils einen Rohrstutzen auszubilden, der in eine zugeordnete Aufnahme am Positionsvorgabeteil eintaucht.

Beim Festklemmen des Tragteils nach dem Anschlagen an die Abstützfläche am Positionsvorgabeteil besteht jedoch die Gefahr, dass sich der Rohrstutzen in der zugeordneten Aufnahme verklemmt. Beim Lösen der Verklemmung des Tragteils besteht die Gefahr, dass das Tragteil unkontrolliert aus der Aufnahme fällt und dabei der Rohrstutzen oder gar die Schneidmittel beschädigt werden.

Aufgabe der Erfindung ist es daher, eine Schneidvorrichtung der eingangs erwähnten Art zu schaffen, mit dem ein schneller Werkzeugwechsel mit hoher Wechselgenauigkeit möglich ist.

Diese Aufgabe wird durch eine Schneidvorrichtung mit den Merkmalen des unabhängigen Anspruchs 1 gelöst.

Die erfindungsgemäße Schneidvorrichtung gemäß dem unabhängigen Anspruch 1 zeichnet sich dadurch aus, dass die Lageraufnahme einen separat von der zugeordneten Komponente ausgebildeten Aufnahmesockel aufweist, der vom Rohrstutzen durchsetzt ist und seinerseits in einem in der zugeordneten Komponente ausgebildeten Sockellager aufgenommen ist.

Der Rohrstutzen ist also allseitig radial beweglich und auch kippbar gegenüber der Komponente, an dem er angeordnet ist. Dadurch ist es möglich, dass sich der Rohrstutzen beim Festklemmen des Tragteils in der Aufnahme ausrichtet und daher stets ein korrekter Sitz zwischen der Abstützfläche und der Gegenstützfläche bei exakter Ausrichtung des Rohrstutzens innerhalb der zugeordneten Aufnahme vorliegt. Damit wird eine hohe Wechselgenauigkeit erzielt, die im Hundertstel-Bereich liegen kann. Fluchtfehler beim Spannen des Tragteils werden durch die schwimmende Lagerung ausgeglichen, was zu einer höheren Wiederholgenauigkeit führt.

Zur schwimmenden Lagerung des Rohrstutzens sind Lagermittel vorgesehen, die eine Lageraufnahme an der zugeordneten Komponente und wenigstens ein zwischen einer Innenwandung der Lageraufnahme und einer Mantelfläche des Rohrstutzens angeordnetes ringförmiges Lagerelement aus elastisch nachgiebigen Material aufweist. Bei dem elastisch nachgiebigen Material kann es sich beispielsweise um Elastomermaterial handeln. In besonders bevorzugter Weise ist das ringförmige Lagerelement als O-Ring bzw. Rundschnur-Dichtring ausgebildet.

Die Lageraufnahme weist einen separat von der zugeordneten Komponente ausgebildeten Aufnahmesockel auf, der vom Rohrstutzen durchsetzt ist und seinerseits in einem in der zugeordneten Komponente ausgebildeten Sockellager aufgenommen ist. In diesem Fall bilden der Aufnahmesockel und der Rohrstutzen gemeinsam einen Kühlschmierstoff-Adapter, der gegebenenfalls bei Bedarf, beispielsweise bei Verschleiß, ausgewechselt werden kann.

In besonders bevorzugter Weise sind Aufnahmesockel und Rohrstutzen als vormontierbare Baugruppe gemeinsam in dem Sockellager der zugeordneten Komponente einbringbar, was zu einer Montageerleichterung führt.

Bei einer Weiterbildung der Erfindung weist der Aufnahmesockel ein Außengewinde auf, das mit einem Innengewinde des Sockellagers verschraubbar ist. Alternativ wären jedoch auch andere Befestigungsarten des Aufnahmesockels im Sockellager denkbar, beispielsweise eine Befestigung mittels einer Rast- oder Schnappverbindung. Theoretisch wäre auch eine nicht demontierbare Befestigung des Aufnahmesockels im Sockellager denkbar, beispielsweise mit einer Klebeverbindung.

Bei einer Weiterbildung der Erfindung sind Axialanschlagmittel vorgesehen, die für einen Axialanschlag des Rohrstutzens beim Einstecken in den Aufnahmesockel sorgen. Dadurch wird verhindert, dass sich der Rohrstutzen in unvorhergesehener Weise in Axialrichtung vom Aufnahmesockel löst, insbesondere beim Trennen von Positionsvorgabeteil und Tragteil.

Bei einer Weiterbildung der Erfindung ist an der nicht mit dem Rohrstutzen versehenen Komponente eine korrespondierend zum Rohrstutzen ausgebildete Stutzenaufnahme ausgebildet, in der der Rohrstutzen in der Gebrauchsstellung aufgenommen ist. In besonders bevorzugter Weise ist zwischen einer Innenwandung der Aufnahme und einer Mantelfläche des Rohrstutzens wenigstens ein ringförmiges Dichtelement angeordnet. In besonders bevorzugter Weise ist das ringförmige Dichtelement als O-Ring bzw. Rundschnur-Dichtring ausgebildet. Zweckmäßigerweise besteht der O-Ring aus Elastomer-Material. Mit dem ringförmigen Lagerelement der Lagermittel, der ebenfalls zweckmäßigerweise als O-Ring ausgebildet ist und ebenfalls Dichtungsaufgaben übernimmt, sind also zwei O-Ringe vorgesehen, die für die Dichtheit gegen Austritt von Kühlschmierstoff in die Umgebung sorgen. Das ringförmige Dichtelement hat zudem eine zusätzliche Aufgabe. Aufgrund des Leibungsdrucks, also des Pressdrucks zwischen dem Ring und dem von diesem umringten Rohrstutzen wird das Tragteil beim Lösen der Klemmung in der Werkzeugaufnahme gehalten, sodass verhindert wird, dass das Tragteil unkontrolliert aus der Aufnahme herausfällt.

Bei einer Weiterbildung der Erfindung sind die Abstützfläche an der dem Tragteil zugewandten Stirnseite des Positionsvorgabeteils und die Gegenstützfläche an der dem Positionsvorgabeteil zugewandten Stirnseite des Tragteils angeordnet.

In besonders bevorzugter Weise sind Abstützfläche und Gegenstützfläche jeweils als in die gleiche Richtung geneigte Schrägflächen ausgebildet.

Es ist möglich, dass die Abstützfläche an einen vom Rest der Stirnseite nach vorn wegragenden Vorsprung ausgebildet ist und vorzugsweise in Richtung von einer Außenseite zum Zentrum des Positionsvorgabeteils zum Rest der Stirnseite zurückspringt.

Ferner ist es möglich, dass die Gegenstützfläche vom Rest der Stirnseite zu einer Außenseite des Tragteils zurückspringt.

Bei einer Weiterbildung der Erfindung ist ein Werkzeughalter mit mehreren Werkzeugaufnahmen für zugeordnete Schneidwerkzeuge vorgesehen.

In besonders bevorzugter Weise sind den Werkzeugaufnahmen jeweils Klemmmittel zugeordnet, die eine zum Festklemmen des Positionsvorgabeteils dienende erste Klemmeinheit und eine insbesondere unabhängig davon bedienbare zweite Klemmeinheit zum Festklemmen des Tragteils aufweisen.

Bei einer Weiterbildung der Erfindung weist der wenigstens eine Kühlschmierstoffkanal ein sich im Positionsvorgabeteil zwischen einer Kühlschmierstoff-Eintrittsöffnung und dem Rohrstutzen erstreckenden Speisekanalabschnitt auf.

Besonders bevorzugt weist der wenigstens eine Kühlschmierstoffkanal einen im Tragteil sich zwischen dem Rohrstutzen und einer sich im Bereich der Schneidmittel befindlichen Kühlschmierstoff-Austrittsöffnung erstreckenden Zuführkanalabschnitt auf.

Zweckmäßigerweise werden also der Speisekanalabschnitt im Positionsvorgabeteil und der Zufuhrkanalabschnitt im Tragteil über den Rohrstutzen und den dort befindlichen Abschnitt des Kühlschmierstoffkanals miteinander verbunden.

In besonders bevorzugter Weise sind der Rohrstutzen am Positionsvorgabeteil und die korrespondierende Aufnahme am Tragteil angeordnet. Diese Anordnung hat den Vorteil, dass bei einem ohnehin unwahrscheinlichen Fall eines unkontrollierten Herausfallens des Tragteils beim Lösen der Klemmung aus der Aufnahme nicht die Gefahr besteht, dass der Rohrstutzen beschädigt wird, da er am Positionsvorgabeteil angeordnet ist und am Tragteil lediglich die hierzu korrespondierende Aufnahme ausgebildet ist. Prinzipiell wäre es jedoch auch denkbar, dass der Rohrstutzen am Tragteil und die zugeordnete korrespondierende Aufnahme am Positionsvorgabeteil angeordnet sind, mit den vorstehend erwähnten Nachteilen.

Ein bevorzugtes Ausführungsbeispiel der Erfindung ist in der Zeichnung dargestellt und wird im Folgenden näher erläutert. In der Zeichnung zeigen:
- Figur 1: eine perspektivische Vorrichtung auf ein bevorzugtes Ausführungsbeispiel der Schneidvorrichtung, mit einem Werkzeughalter und zweiteiligem Schneidwerkzeug, wobei das Tragteil des Klemmschafts vom Positionsvorgabeteil getrennt ist,
- Figur 2: eine perspektivische Darstellung der Schneidvorrichtung von Figur 1, wobei sich das Schneidwerkzeug in der Gebrauchsstellung befindet,
- Figur 3: eine perspektivische Darstellung des Schneidwerkzeugs, wobei Positionsvorgabeteil und Tragteil voneinander getrennt sind,
- Figur 4: eine perspektivische Darstellung des Schneidwerkzeugs von Figur 3 bei zusammengesetztem Klemmschaft des Schneidwerkzeugs,
- Figur 5: eine Seitenansicht auf das Schneidwerkzeug von Figur 4, wobei in gestrichelten Linien der Kühlschmierstoffkanal der Rohrstutzen und Lagermittel für den Rohrstutzen dargestellt sind,
- Figur 6: eine Seitenansicht des Schneidwerkzeugs in einer gegenüber Figur 5 um 90° gedrehten Stellung,
- Figur 7: eine vergrößerte Darstellung der Einzelheit Y aus Figur 5,
- Figur 8: eine Stirnansicht auf das Schneidwerkzeug von Figur 6 und
- Figur 9: eine vergrößerte Seitenansicht auf den Rohrstutzen und die Lagermittel des Schneidwerkzeugs von Figur 5 .

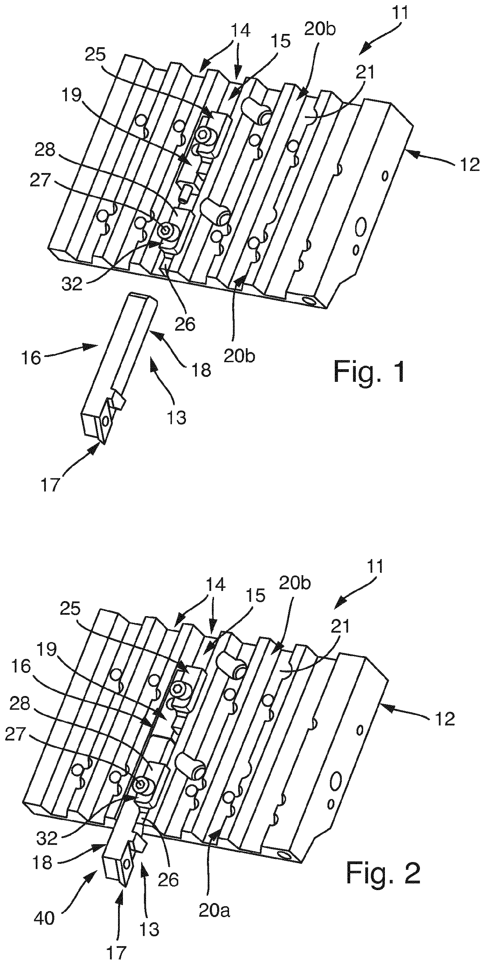

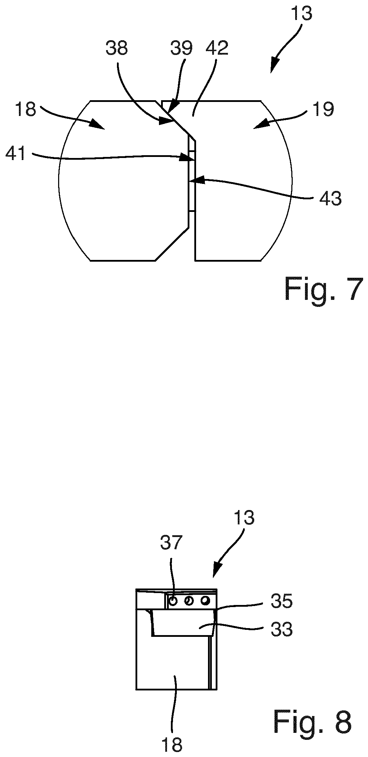

Die Figuren 1 bis 9 zeigen ein bevorzugtes Ausführungsbeispiel der erfindungsgemäßen Schneidvorrichtung 11. Die Schneidvorrichtung 11 wird im Folgenden beispielhaft beim Einsatz in einem Langdrehautomaten beschrieben. Die Schneidvorrichtung 11 umfasst in diesem Fall einen Werkzeughalter 12, der in den Figuren 1 und 2 dargestellt ist. Der Werkzeughalter 12 ist Teil eines Werkzeugwechselsystems, zu denen anders aufgebaute Werkzeughalter 12 mit anderen Werkzeugen gehören. Der hier beispielhaft dargestellte Werkzeughalter 12 dient zur Halterung von Schneidwerkzeugen 13, die insbesondere zur spanabhebenden Außenbearbeitung von sich rotierenden stangenartigen Werkstücken dienen. Beispielsweise können durch die Schneidwerkzeuge 13 Nuten in das zu bearbeitende Werkstück eingeschnitten werden.

Der beispielhaft dargestellte Werkzeughalter 12 besitzt mehrere jeweils nutartig ausgestaltete Werkzeugaufnahmen 14 zur Aufnahme jeweils eines Schneidwerkzeugs 13. Im Beispielsfall sind die nutartigen Werkezugaufnahmen 14 in Reihe nebeneinander parallel zueinander ausgerichtet angeordnet.

Den Werkzeugaufnahmen 14 sind jeweils Klemmmittel 15 zum Festklemmen des Schneidwerkzeugs 13 zugeordnet, die nachfolgend noch näher beschrieben werden.

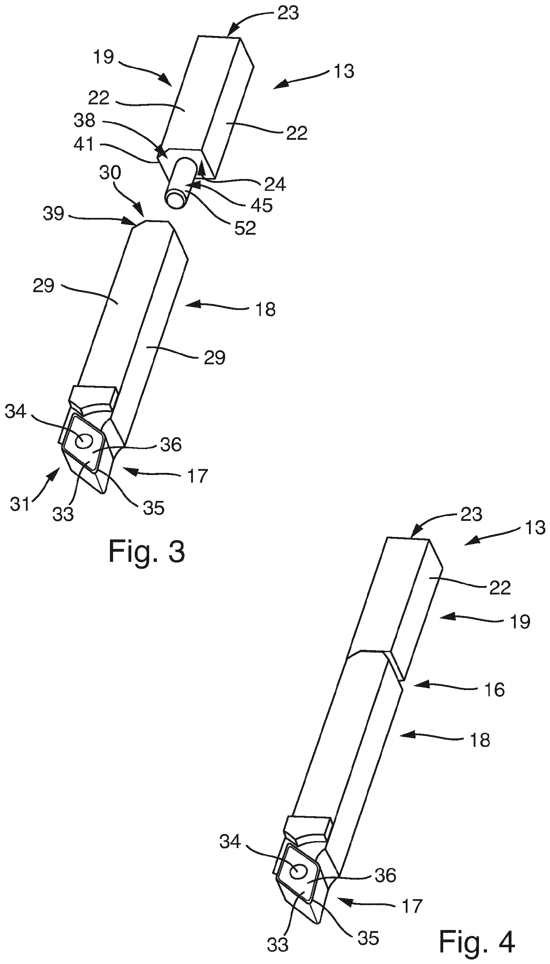

Wie insbesondere in den Figuren 3 und 4 gezeigt, besitzt das Schneidwerkzeug 13 einen im Beispielsfall quaderförmigen Klemmschaft 16 und in Kontakt mit dem zu bearbeitenden Werkstück zu bringende oder stehende Schneidmittel 17. Wie insbesondere in Figur 3 dargestellt, besitzt der Klemmschaft 16 mehrere Komponenten, von denen eine ein die Schneidmittel aufweisendes Tragteil 18 und eine andere ein Positionsvorgabeteil 19 ist.

Die nutartig ausgebildeten Werkzeugaufnahmen 14 besitzen jeweils zwei einander gegenüberliegende Seitenwände 20a, 20b und einen Boden 21.

Wie insbesondere in Figur 3 gezeigt, besitzt das Positionsvorgabeteil 19 aufgrund dessen quaderartigen Form vier Seitenflächen 22, eine Rückseite 23 und eine diese entgegengesetzt liegende Stirnseite 24.

Wie insbesondere in Figur 1 oder 2 gezeigt, lässt sich das Positionsvorgabeteil 19 über die Klemmmittel 15 in der zugeordneten Werkzeugaufnahme 14 festklemmen. Die Klemmmittel 15 besitzen hierzu eine dem Positionsvorgabeteil 19 zugeordnete erste Klemmeinheit 25, mit einem zwischen einer als Klemmfläche dienenden Seitenfläche 22 und einer zugeordneten Seitenwand 20a der Werkzeugaufnahme 14 angeordneten Klemmkeil 26, der über Stellmittel zum Boden 21 der Werkzeugaufnahme 14 hin und von diesem weg bewegbar ist. Die Stellmittel umfassen eine Stellschraube 27, die an einem Schraubenträger 28 verstellbar gelagert ist, wobei beim Einschrauben der Stellschraube 27 der Klemmkeil 26 zum Boden hin verlagerbar ist. Dabei drückt der Klemmkeil 26 auf die Klemmfläche des Positionsvorgabeteils 19 und drückt dieses seitwärts, wodurch das Positionsvorgabeteil 19 festgeklemmt wird. Der Schraubenträger 28 dient gleichzeitig als Niederhalter und spannt das Positionsvorgabeteil 19 auf den Boden 21 der Werkzeugaufnahme 14 .

Das in den Figuren 3 und 4 dargestellte Tragteil 18 ist im Beispielsfall gegenüber dem Positionsvorgabeteil 19 länger ausgebildet. Auch das Tragteil 18 besitzt vier Seitenflächen 29, eine Rückseite 30 und eine Stirnseite 31. Zum Festklemmen des Tragteils 18 in der zugeordneten Werkzeugaufnahme 14 dient eine zweite Klemmeinheit 32, die im Beispielsfall identisch zur ersten Klemmeinheit 25 aufgebaut ist und daher ebenfalls einen Klemmkeil 26, eine Stellschraube 27 und einen Schraubenträger 28 aufweist. Die beiden Klemmeinheiten 25, 32 sind unabhängig voneinander bedienbar, wobei zum Werkzeugwechsel lediglich die zweite Klemmeinheit 32 betätigt wird, und das Positionsvorgabeteil 19 über die erste Klemmeinheit 25 festgeklemmt bleibt.

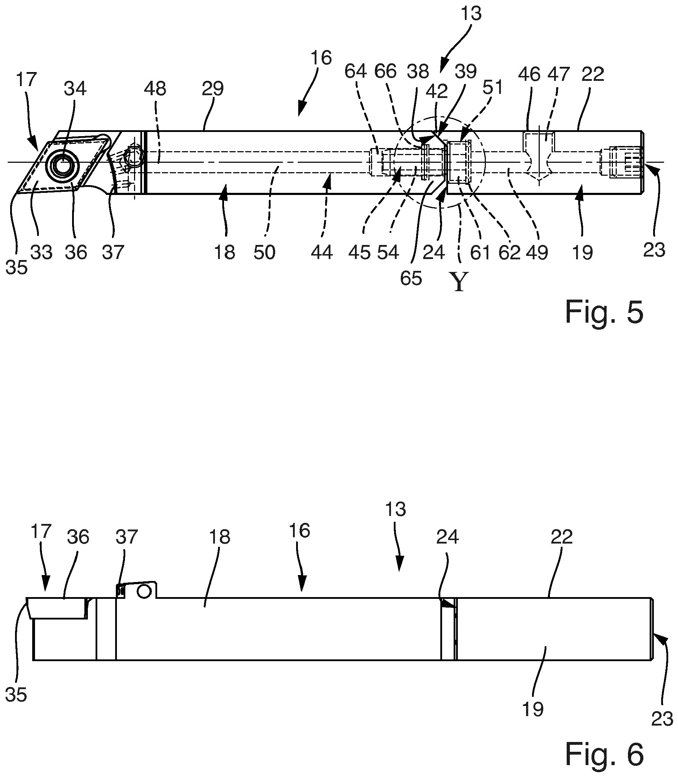

Wie insbesondere in den Figuren 4 und 5 gezeigt, sind am Tragteil 18 im Bereich dessen Stirnseite 31 Schneidmittel 17 angeordnet. Die Schneidmittel 17 umfassen im gezeigten Beispielsfall eine Wendeschneidplatte 33, die an einem Plattensitz aufgenommen und mittels einer Befestigungsschraube 34 festgeklemmt ist. Die Wendeschneidplatte 33 ist im Beispielsfall prismenförmig ausgebildet und besitzt eine von zwei spitz zulaufenden Seitenflanken gebildete Schneidkante 35, die zur spanabhebenden Bearbeitung in Kontakt mit dem zu bearbeitenden Werkstück gelangt. Die großflächige Oberseite der Wendeschneidplatte 33 bildet eine Spanfläche 36.

Zur Kühlung der Schneidkante 35 und Spanabfuhr dient Kühlschmierstoff, das aus im Beispielsfall mehreren Kühlschmierstoff-Austrittsöffnungen 37 austritt und zielgerichtet in Richtung Spanfläche 36 spritzt.

Die Versorgung mit Kühlschmierstoff erfolgt über den Klemmschaft 16, worauf nachfolgend noch näher eingegangen wird.

Wie insbesondere die Zusammenschau der Figuren 3 und 4 zeigt, ist am Positionsvorgabeteil 19 eine Abstützfläche 38 ausgebildet, die mit einer am Tragteil 18 ausgebildeten Gegenstützfläche 39 zusammenwirkt. In der in Figur 4 gezeigten Gebrauchsstellung 40 liegen Abstützfläche 38 und Gegenstützfläche 39 aneinander an. Abstützfläche 38 und Gegenstützfläche 39 sorgen für eine Zentrierung des Tragteils 18 gegenüber dem ortsfest verbliebenen Positionsvorgabeteil 19.

Wie insbesondere in Figur 3 dargestellt, ist die Abstützfläche 38 am Positionsvorgabeteil 19 im Bereich dessen Stirnseite 24 angeordnet, und zwar an einem von einem rechtwinklig zur Seitenfläche 22 ausgebildeten Stirnflächenabschnitt 41 nach vorne vorspringenden leistenartigen Abstützvorsprung 42. Dabei ist die Abstützfläche 38 als Schrägfläche ausgebildet und schräg zum Stirnflächenabschnitt 41 ausgerichtet, wobei die Schrägfläche in Richtung von der Seitenfläche 22 zum Stirnflächenabschnitt 41 zurückspringt.

Wie insbesondere in den Figuren 4 und 5 gezeigt, ist die Gegenstützfläche 39 am Tragteil 18 ebenfalls im Bereich dessen Stirnseite 31 ausgebildet. Auch die Gegenstützfläche 39 ist als Schrägfläche ausgebildet. Sie ist schräg zu einem Stirnflächenabschnitt 43 ausgerichtet. In Richtung vom Stirnflächenabschnitt 43 zur zugeordneten Seitenfläche 29 des Tragteils 18 springt die Gegenstützfläche 39 zurück.

Wie bereits erwähnt, erfolgt die Versorgung mit Kühlschmierstoff über den Klemmschaft 16. Hierzu ist der Klemmschaft 16 von wenigstens einem, im Beispielsfall einem einzigen Kühlschmierstoffkanal 44 durchsetzt. Da der Klemmschaft 16 zweiteilig mit Positionsvorgabeteil 19 und Tragteil 18 ausgebildet ist, besteht der Bedarf eines zur Umgebung abgedichteten Übergangs des Kühlschmierstoffkanals 44 zwischen dem Positionsvorgabeteil 19 und dem Tragteil 18.

Der Kühlschmierstoffkanal 44 ist hierzu teilweise an einem an einer der Komponenten angeordneten Rohrstutzen 45 ausgebildet, der in die andere Komponente eintaucht.

Der Rohrstutzen 45 befindet sich im gezeigten Beispielsfall am Positionsvorgabeteil 19, insbesondere im Bereich dessen Stirnseite 24. Zweckmäßigerweise ist der Rohrstutzen 45 konzentrisch zu einer Mittelachse des Positionsvorgabeteils 19 angeordnet.

Der Kühlschmierstoffkanal 44 erstreckt sich wie bereits erwähnt durch den Klemmschaft 16, also sowohl durch das Positionsvorgabeteil 19 als auch durch das Tragteil 18. Die Zufuhr von Kühlschmierstoff erfolgt über eine Kühlschmierstoff-Eintrittsöffnung 46, die entweder an einer Seitenfläche 22 des Positionsvorgabeteils 19 oder an dessen Rückseite 23 ausgebildet sein kann. Im gezeigten Beispielsfall befindet sich die Kühlschmierstoff-Eintrittsöffnung 46 an der Seitenfläche 22 und die Öffnung an der Rückseite 23 ist mittels eines Verschlusselements, beispielsweise Schraube, verschlossen.

Wie beispielhaft in Figur 5 dargestellt, besitzt der Kühlschmierstoffkanal 44 im Bereich des Positionsvorgabeteils 19 einen von der Kühlschmierstoff-Eintrittsöffnung 46 ausgehenden Zweigkanalabschnitt 47, der in einen insbesondere koaxial zu einer Längsachse 48 des Schneidwerkzeugs 13 zwischen der rückseitigen Öffnung und dem Rohrstutzen 45 verlaufenden Speisekanalabschnitt 49 mündet. Am Übergang zwischen dem Positionsvorgabeteil 19 und dem Tragteil 18 wird der Kühlschmierstoffkanal 44 vom Rohrstutzen 45 gebildet. Im Tragteil 18 erstreckt sich vom Rohrstutzen 45 ausgehend ein ebenfalls zweckmäßigerweise koaxial zur Längsachse 48 verlaufender Zuführkanalabschnitt 50 zu der wenigstens einen Kühlschmierstoff-Austrittsöffnung 37 im Bereich der Schneidmittel 17.

Ein wichtiger Aspekt ist die Lagerung des Rohrstutzens 45 in der zugeordneten Komponente, also entweder am Positionsvorgabeteil 19 oder am Tragteil 18. Im gezeigten Beispielsfall ist der Rohrstutzen 45 dem Positionsvorgabeteil 19 zugeordnet.

Der Rohrstutzen 45 ist unter Ermöglichung allseitiger Radial- und Kippbewegungen gegenüber der Komponente, an dem er angeordnet ist, also im Beispielsfall dem Positionsvorgabeteil 19, schwimmend gelagert.

Zur schwimmenden Lagerung des Rohrstutzens 45 sind Lagermittel 51 vorgesehen, die eine Lageraufnahme an der zugeordneten Komponente, also im Beispielsfall des Positionsvorgabeteils 19, und wenigstens ein zwischen einer Innenwandung der Lageraufnahme und einer Mantelfläche 52 des Rohrstutzens 45 angeordnetes ringförmiges Lagerelement 53 aus elastisch nachgiebigem Material aufweisen.

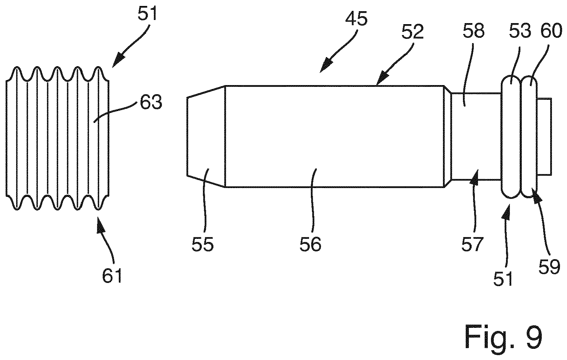

Wie insbesondere in Figur 9 dargestellt, besitzt der Rohrstutzen 45, der auch als rohrförmiges Düsenelement bezeichnet werden könnte, mehrere Funktionsabschnitte mit unterschiedlichen Funktionen. Der Rohrstutzen 45 wird über seine gesamte Länge von einem Stutzenkanalabschnitt 54 durchsetzt, der, wie bereits erwähnt, einen Teil des Kühlschmierstoffkanals 44 bildet. Der Rohrstutzen 45 besitzt einen insbesondere konisch ausgebildeten Mündungsabschnitt 55, der zum einen eine Düsenwirkung für im Stutzenkanalabschnitt 54 strömenden Kühlschmierstoff bildet und zum anderen das Einführen in eine zugeordnete Stutzenaufnahme 56 im Tragteil 18 erleichtert. In Axialrichtung an den Mündungsabschnitt 55 grenzt ein relativ langer Mittelabschnitt 56 an, der wiederum in Axialrichtung in einen Lagerabschnitt 57 übergeht. Zweckmäßigerweise besitzt der Lagerabschnitt 57 einen gegenüber dem Durchmesser des Mittelabschnitts 56 durchmesserkleineren Trägerbereich 58, auf dem das ringförmige Lagerelement 53 in Form eines O-Rings aufgefädelt ist. Der Trägerbereich 58 wird endseitig von Axialnschlagmitteln 59 begrenzt, die beispielhaft in Form eines gegenüber dem Durchmesser des Trägerbereichs 58 durchmessergrößeren Anschlagflansch 60 gebildet sind. Das ringförmige Lagerelement 53, also im Beispielsfall der O-Ring, liegt an einer zum Trägerbereich 58 zugewandten Anschlagfläche des Anschlagsflansch 60 an.

Wie insbesondere in Figur 5 und auch in Figur 9 gezeigt, weist die Lageraufnahme am Positionsvorgabeteil 19 einen separat vom Positionsvorgabeteil 19 ausgebildeten Aufnahmesockel 61 auf, der vom Rohrstutzen 45 durchsetzt ist und seinerseits in einem im Positionsvorgabeteil 19 ausgebildeten Sockellager 62 aufgenommen ist. Der Aufnahmesockel 61 ist in Figur 9 beispielhaft mit ringförmiger Gestalt gezeigt und besitzt ein Außengewinde 63, das mit einem Innengewinde (nicht dargestellt) des Sockellagers 62 verschraubbar ist. Der ringförmige Aufnahmesockel 61 und der Rohrstutzen 45 sind als vormontierbare Baugruppe gemeinsam in das Sockellager 62 des Positionsvorgabeteils 19 einbringbar. Bei der Vormontage wird der Rohrstutzen 45 durch den ringförmigen Aufnahmesockel 61 gesteckt. Die Durchgangsöffnung (nicht dargestellt) des Aufnahmesockels 61 ist konisch ausgebildet, wodurch sich der O-Ring beim Einstecken, der zuvor auf den Rohrstutzen 45 aufgefädelt wurde und mittels des Anschlagflansches 60 axial fixiert ist, sich zwischen der Mantelfläche 52 des Rohrstutzen 45 und der Innenwand des Aufnahmesockels 61 befindet. Eine Weiterbewegung des Rohrstutzens 45 gegenüber dem Aufnahmesockel 61 in Axialrichtung ist aufgrund des konischen Verlaufs der Durchgangsöffnung des Aufnahmesockels 61 nicht möglich.

Nach der Vormontage wird der Rohrstutzen 45 mit dem Aufnahmesockel 61 als Baueinheit in das Sockellager 62 eingeschraubt. Dabei befinden sich am Aufnahmesockel 61 insbesondere zwei diametral zur Stutzenlängsachse einander gegenüberliegende Ausklinkungen in der Wandung des Aufnahmesockels 61, die zum Eingriff eines Werkzeugs dienen, sodass ein Einschrauben der Baueinheit in das Sockellager 62 möglich ist.

Wie insbesondere in Figur 5 gezeigt, ist die Stutzenaufnahme 64 koaxial zur Längsachse des Schneidwerkzeugs 13 ausgebildet und bildet eine Erweiterung des im Tragteil 18 ausgebildeten Zuführkanalabschnitts 50. An der Innenwand der Stutzenaufnahme 64 befindet sich eine gegenüber der Wandungsfläche zurückversetzte Ringnut 65, in die ein ringförmiges Dichtelement 66, das ebenfalls zweckmäßigerweise als O-Ring ausgebildet ist, eingesetzt ist.

Zum Werkzeugwechsel bedarf es lediglich des Lösens der Festklemmung des Tragteils 18 an der zweiten Klemmeinheit 32, während das Positionsvorgabeteil 19 in exakter Position in der Werkzeugaufnahme 14 festgeklemmt bleibt. Der am Positionsvorgabeteil 19 angeordnete Rohrstutzen 45 verbleibt daher ebenfalls beim Werkzeugwechsel an Ort und Stelle. Zum Lösen der Klemmung des Tragteils 18 wird die Stellschraube 27 der zweiten Klemmeinheit 32 gelöst, wodurch der Klemmkeil 26 aus der nutartigen Werkzeugaufnahme 14 heraus verlagert wird, wodurch das Tragteil 18 freigegeben wird. Dadurch, dass das ringförmige Dichtelement 66 zwischen der Innenwandung der Stutzenaufnahme 64 und der Mantelfläche 52 des Rohrstutzens mit einem Leibungsdruck nach radial innen wirkt, wird verhindert, dass das Tragteil 18 beim Lösen der Klemmung aus der Werkzeugaufnahme 14 herausfällt und dadurch beschädigt werden kann. Das Tragteil 18 muss also vom Benutzer pro aktiv aus der Werkzeugaufnahme 14 herausgezogen werden.

Nach dem Wechsel der Schneidmittel 17, insbesondere dem Wenden der eingespannten Wendeschneidplatte 33 wird das Tragteil 18 wieder zurück in die zugeordnete Werkzeugaufnahme 14 gesetzt. Dabei stößt die Gegenstützfläche 39 an die Abstützfläche 38 am Positionsvorgabeteil 19. Gleichzeitig fährt der Rohrstutzen 45 in die zugeordnete Stutzenaufnahme 64 des Tragteils 18 ein. Da das Positionsvorgabeteil 19 exakt ausgerichtet ist, wird durch das Anschlagen der Gegenstützfläche 39 an die Abstützfläche 38 eine exakte Positionierung des Tragteils 18 erreicht. Ein Verklemmen beim Einfahren des Rohrstutzens 45 in die zugeordnete Stutzenaufnahme 64 wird dadurch verhindert, dass der Rohrstutzen 45 über die Lagermittel 51 schwimmend gelagert ist. Nach der Zentrierung des wieder eingeführten Tragteils 18 wird dieses wiederum festgeklemmt, wobei die Stellschraube 27 der zweiten Klemmeinheit 32 in die Werkzeugaufnahme 14 hinein verlagert wird, was zu einer Seitwärtsbewegung des Tragteils 18 und gleichzeitiger Festklemmung führt. Diese Seitwärtsbewegung wird durch die schwimmende Lagerung des Rohrstutzens 45 ebenfalls ausgeglichen.

## Patentansprüche

1. Schneidvorrichtung zur spanabhebenden Bearbeitung von Werkstücken, mit wenigstens einem Schneidwerkzeug (13), das einen Klemmschaft (16) und in Kontakt mit dem zu bearbeitenden Werkstück zu bringende oder stehende Schneidmittel (17) aufweist, wobei der Klemmschaft (16) mehrere Komponenten aufweist, von denen eine ein die Schneidmittel (17) aufweisendes Tragteil (18) und eine andere ein Positionsvorgabeteil (19) ist, die voneinander unabhängig in einer zugeordneten Werkzeugaufnahme (14) eines Werkzeughalters (12) festklemmbar sind, wobei am Positionsvorgabeteil (19) eine Abstützfläche (38) und am Tragteil (18) eine der Abstützfläche (38) zugewandte Gegenstützfläche (39) ausgebildet sind, die in einer Gebrauchsstellung (40), in der das Tragteil (18) und das Positionsvorgabeteil (19) in der Werkzeugaufnahme (14) des Werkzeughalters (12) aufgenommen sind, aneinander anliegen, und wobei der Klemmschaft (16) von wenigstens einem Kühlschmierstoffkanal (44) durchsetzt ist, der teilweise an einem an einer der Komponenten angeordneten Rohrstutzen (45) ausgebildet ist und in die andere Komponente eintaucht, wobei der Rohrstutzen (45) unter Ermöglichung allseitiger Radial- und Kippbewegungen gegenüber der Komponente, an dem er angeordnet ist, schwimmend gelagert ist, wobei zur schwimmenden Lagerung des Rohrstutzens (45) Lagermittel (51) vorgesehen sind, die eine Lageraufnahme an der zugeordneten Komponente und wenigstens ein zwischen einer Innenwandung der Lageraufnahme und einer Mantelfläche (52) des Rohrstutzens (45) angeordnetes ringförmiges Lagerelement (53) aus elastisch nachgiebigen Material aufweist, **dadurch gekennzeichnet, dass** die Lageraufnahme einen separat von der zugeordneten Komponente ausgebildeten Aufnahmesockel (61) aufweist, der vom Rohrstutzen (45) durchsetzt ist und seinerseits in einem in der zugeordneten Komponente ausgebildeten Sockellager (62) aufgenommen ist.

2. Schneidvorrichtung nach Anspruch 1, **dadurch gekennzeichnet, dass** der Aufnahmesockel (61) ein Außengewinde (63) aufweist, das mit einem Innengewinde des Sockellagers (62) verschraubbar ist.

3. Schneidvorrichtung nach einem der Ansprüche 1 oder 2, **dadurch gekennzeichnet, dass** Axialanschlagmittel (59) vorgesehen sind, die für einen Axialanschlag des Rohrstutzens (45) beim Einstecken in den Aufnahmesockel (61) sorgen.

4. Schneidvorrichtung nach einem der vorhergehenden Ansprüche, **dadurch gekennzeichnet, dass** an der nicht mit dem Rohrstutzen (45) versehenen Komponente eine korrespondierend zum Rohrstutzen (45) ausgebildete Stutzenaufnahme (64) ausgebildet ist, in der der Rohrstutzen (45) in der Gebrauchsstellung (40) aufgenommen ist, wobei vorzugsweise zwischen einer Innenwandung der Stutzenaufnahme (64) und einer Mantelfläche (52) des Rohrstutzens (45) wenigstens ein ringförmiges Dichtelement (66) angeordnet ist.

5. Schneidvorrichtung nach Anspruch 4, **dadurch gekennzeichnet, dass** das ringförmige Dichtelement (66) als O-Ring ausgebildet ist.

6. Schneidvorrichtung nach einem der vorhergehenden Ansprüche, **dadurch gekennzeichnet, dass** sich Abstützfläche (38) an der dem Tragteil (18) zugewandten Stirnseite (24) und die Gegenstützfläche (39) an der dem Positionsvorgabeteil (19) zugewandten Stirnseite (31) des Tragteils (18) angeordnet sind.

7. Schneidvorrichtung nach einem der vorhergehenden Ansprüche, **dadurch gekennzeichnet, dass** Abstützfläche (38) und Gegenstützfläche (39) jeweils als in die gleiche Richtung geneigte Schrägflächen ausgebildet sind, wobei vorzugsweise die Abstützfläche (38) an einem vom Rest der Stirnseite nach vorne wegragenden Vorsprung (42) ausgebildet ist und vorzugsweise in Richtung von einer Außenseite zum Zentrum des Positionsvorgabeteils (19) zum Rest der Stirnseite zurückspringt.

8. Schneidvorrichtung nach einem der Ansprüche 6 oder 7, **dadurch gekennzeichnet, dass** die Gegenstützfläche (39) vom Rest der Stirnseite ausgehend zu einer Außenseite des Tragteils (18) zurückspringt.

9. Schneidvorrichtung nach einem der vorhergehenden Ansprüche, **gekennzeichnet durch** einen Werkzeughalter (12) mit mehreren Werkzeugaufnahmen (14) für zugeordnete Schneidwerkzeuge (13), wobei vorzugsweise den Werkzeugaufnahmen (14) jeweils Klemmmittel (15) zugeordnet sind, die eine zum Festklemmen des Positionsvorgabeteils (19) dienende erste Klemmeinheit (25) und eine insbesondere unabhängig davon bedienbare zweite Klemmeinheit (32) zum Festklemmen des Tragteils (18) aufweisen.

10. Schneidvorrichtung nach einem der vorhergehenden Ansprüche, **dadurch gekennzeichnet, dass** der wenigstens eine Kühlschmierstoffkanal (44) einen im Positionsvorgabeteil (19) sich zwischen einer Kühlschmierstoff-Eintrittsöffnung (46) und dem Rohrstutzen (45) erstreckenden Speisekanalabschnitt (49) aufweist.

11. Schneidvorrichtung nach einem der vorhergehenden Ansprüche, **dadurch gekennzeichnet, dass** der wenigstens eine Kühlschmierstoffkanal (44) einen im Tragteil (18) sich zwischen dem Rohrstutzen (45) und einer sich im Bereich der Schneidmittel (17) befindlichen Kühlschmierstoff-Austrittsöffnung (37) erstreckende Zuführkanalabschnitt (50) aufweist.

12. Schneidvorrichtung nach einem der vorhergehenden Ansprüche, **dadurch gekennzeichnet, dass** der Rohrstutzen (45) am Positionsvorgabeteil (19) und die korrespondierende Stutzenaufnahme (64) am Tragteil (18) angeordnet sind.

## Claims

1. Cutting device for machining workpieces, with at least one cutting tool (13) having a clamping shank (16) and cutting means (17) to be brought into or being in contact with the workpiece to be machined, wherein the clamping shank (16) has several components, one of which is a support part (18) having the cutting means (17) and the other of which is a position presetting part (19), which parts can be clamped in a tool-receiving socket (14) of a tool holder (12) independently of each other, wherein a support surface (38) is formed at the position presetting part (19) and a counter-support surface (39) facing the support surface (38) is formed at the support part (18), which support surfaces bear against each other in a position of use (40), in which the support part (18) and the position presetting part (19) are held in the tool-receiving socket (14) of the tool holder (12), and wherein at least one coolant/lubricant passage (44), which is partially formed at a pipe connection (45) located at one of the components and dipping into the other component, passes through the clamping shank (16), wherein the pipe connection (45) is floatingly mounted and capable of radial and tilting movements relative to the component at which it is mounted, wherein for the floating mounting of the pipe connection (45) bearing means (51) are provided, which have a bearing receptacle at the associated component and at least one annular bearing element (53) located between an inner wall of the bearing receptacle and an outer surface (52) of the pipe connection (45) and made of an elastically yielding material, **characterised in that** the bearing receptacle has a receptacle socket (61), which is formed separately from the associated component and passed through by the pipe connection (45) and which is in turn accommodated in a socket bearing (62) of the associated component.

2. Cutting device according to claim 1, **characterised in that** the receptacle socket (61) has a male thread (63), which can be screwed together with a female thread (62).

3. Cutting device according to claim 1 or 2, **characterised in that** axial stop means (59) are provided to cater for an axial stop of the pipe connection (45) when it is inserted into the receptacle socket (61).

4. Cutting device according to any of the preceding claims, **characterised in that** a connection socket (64), in which the pipe connection (45) is accommodated in the position of use (40), is formed at the component not provided with the pipe connection (45) to correspond to the pipe connection (45), wherein at least one annular sealing element (66) is preferably arranged between an inner wall of the connection receptacle (64) and an outer surface (52) of the pipe connection (45).

5. Cutting device according to claim 4, **characterised in that** the annular sealing element (66) is designed as an O-ring.

6. Cutting device according to any of the preceding claims, **characterised in that** the support surface (38) is located at the end face (24) facing the support part (18) and the counter-support surface (39) is located at the end face (31) of the support surface (38) facing the position presetting part (19).

7. Cutting device according to any of the preceding claims, **characterised in that** the support surface (38) and the counter-support surface (39) are each designed as sloping surfaces inclined in the same direction, wherein the support surface (38) is preferably formed at a projection (42) projecting in a forward direction from the rest of the end face and preferably returns to the rest of the end face in the direction from an outside towards the centre of the position presetting part (19).

8. Cutting device according to claim 6 or 7, **characterised in that** the counter-support surface (39) returns from the rest of the end face to an outside of the support part (18).

9. Cutting device according to any of the preceding claims, **characterised by** tool holder (12) with several tool-receiving sockets (14) with associated cutting tools (13), wherein each of the tool-receiving sockets (14) is preferably assigned clamping means (15) having a first clamping unit (25) used for clamping the position presetting part (19) and a second clamping unit (32), which can in particular be operated independently from the first, for clamping the support part (18).

10. Cutting device according to any of the preceding claims, **characterised in that** the at least one coolant/lubricant passage (44) has a feed passage section (49) extending between a coolant/lubricant inlet opening (46) and the pipe connection (45).

11. Cutting device according to any of the preceding claims, **characterised in that** the at least one coolant/lubricant passage (44) has a supply passage section (50) extending in the support part (18) between the pipe connection (45) and a coolant/lubricant outlet opening (37) located in the region of the cutting means (17).

12. Cutting device according to any of the preceding claims, **characterised in that** the pipe connection (45) is located at the position presetting part (19) and the corresponding connection socket (64) is located at the support part (18).

## Revendications

1. Dispositif de coupe pour l'usinage par enlèvement de copeaux de pièces, avec au moins un outil de coupe (13) qui présente un arbre de serrage (16) et des moyens de coupe (17) se trouvant ou à amener en contact avec la pièce à usiner, dans lequel l'arbre de serrage (16) présente plusieurs composants, dont un est une partie porteuse (18) présentant les moyens de coupe (17) et une autre une partie de définition de position (19) qui sont serrables indépendamment l'une de l'autre dans un logement d'outil (14) associé d'un support d'outil (12), dans lequel une surface d'appui (38) est réalisée au niveau de la partie de définition de position (19) et une surface d'appui antagoniste (39) tournée vers la surface d'appui (38) est réalisée au niveau de la partie porteuse (18), qui reposent l'une contre l'autre dans une position d'usage (40) dans laquelle la partie porteuse (18) et la partie de définition de position (19) sont reçues dans le logement d'outil (14) du support d'outil (12), et dans lequel l'arbre de serrage (16) est traversé par au moins un canal de lubrifiant de refroidissement (44) qui est réalisé partiellement au niveau d'une tubulure (45) agencée au niveau d'un des composants et pénètre dans l'autre composant, dans lequel la tubulure (45) est logée de manière flottante en permettant des mouvements radiaux et de basculement de tous les côtés par rapport au composant, au niveau duquel elle est agencée, dans lequel des moyens de palier (51) sont prévus pour le logement flottant de la tubulure (45) qui présente un logement de palier au niveau du composant associé et au moins un élément de palier (53) annulaire en un matériau flexible élastiquement agencé entre une paroi intérieure du logement de palier et une surface enveloppe (52) de la tubulure (45), **caractérisé en ce que** le logement de palier présente un socle de réception (61) réalisé séparément du composant associé, qui est traversé par la tubulure (45) et de son côté est reçu dans un palier de socle (62) réalisé dans le composant associé.

2. Dispositif de coupe selon la revendication 1, **caractérisé en ce que** le socle de réception (61) présente un filet extérieur (63) qui peut être vissé avec un filet intérieur du palier de socle (62).

3. Dispositif de coupe selon l'une des revendications 1 ou 2, **caractérisé en ce que** des moyens de butée axiale (59) sont prévus, lesquels veillent à une butée axiale de la tubulure (45) lors de l'enfichage dans le socle de réception (61).

4. Dispositif de coupe selon l'une des revendications précédentes, **caractérisé en ce qu'**un logement de tubulure (64) réalisé de manière correspondante à la tubulure (45) est réalisé au niveau du composant non pourvu de la tubulure (45), dans lequel la tubulure (45) est reçue dans la position d'usage (40) dans lequel au moins un élément étanche (66) annulaire est de préférence agencé entre une paroi intérieure du logement de tubulure (64) et une surface enveloppe (52) de la tubulure (45).

5. Dispositif de coupe selon la revendication 4, **caractérisé en ce que** l'élément étanche (66) annulaire est réalisé en tant que joint torique.

6. Dispositif de coupe selon l'une des revendications précédentes, **caractérisé en ce que** la surface d'appui (38) est agencée au niveau du côté avant (24) tourné vers la partie porteuse (18) et la surface d'appui antagoniste (39) est agencée au niveau du côté avant (31) tourné vers la partie de définition de position (19) de la partie porteuse (18).

7. Dispositif de coupe selon l'une des revendications précédentes, **caractérisé en ce que** la surface d'appui (38) et la surface d'appui antagoniste (39) sont réalisées respectivement en tant que surfaces obliques inclinées dans la même direction, dans lequel la surface d'appui (38) est de préférence réalisée au niveau d'une saillie (42) dépassant du reste du côté avant vers l'avant et de préférence revient en direction d'un côté extérieur au centre de la partie de définition de position (19) au reste du côté avant.

8. Dispositif de coupe selon l'une des revendications 6 ou 7, **caractérisé en ce que** la surface d'appui antagoniste (39) revient du reste du côté avant à partir d'un côté extérieur de la partie porteuse (18).

9. Dispositif de coupe selon l'une des revendications précédentes, **caractérisé par** un support d'outil (12) avec plusieurs logements d'outil (14) pour des outils de coupe (13) associés, dans lequel respectivement des moyens de serrage (15) sont de préférence associés aux logements d'outil (14) qui présentent une première unité de serrage (25) servant au serrage de la partie de définition de position (19) et une seconde unité de serrage (32) manipulable en particulier indépendamment de celle-ci pour le serrage de la partie porteuse (18).

10. Dispositif de coupe selon l'une des revendications précédentes, **caractérisé en ce que** l'au moins un canal de lubrifiant de refroidissement (44) présente une section de canal d'alimentation (49) s'étendant dans la partie de définition de position (19) entre une ouverture d'entrée de lubrifiant de refroidissement (46) et la tubulure (45).

11. Dispositif de coupe selon l'une des revendications précédentes, **caractérisé en ce que** l'au moins un canal de lubrifiant de refroidissement (44) présente une section de canal d'amenée (50) s'étendant dans la partie porteuse (18) entre la tubulure (45) et une ouverture de sortie de lubrifiant de refroidissement (37) se trouvant dans la zone des moyens de coupe (17).

12. Dispositif de coupe selon l'une des revendications précédentes, **caractérisé en ce que** la tubulure (45) est agencée au niveau de la partie de définition de position (19) et le logement de tubulure (64) correspondant est agencé sur la partie porteuse (18).
